# FASCICULE DE BREVET EUROPEEN

(11) **EP 1 713 341 B1**
(45) Date de publication et mention de la délivrance du brevet: **06.01.2010**
(21) Numéro de dépôt: 05707282.9
(22) Date de dépôt: 09.02.2005
(51) Int. Cl.: A21D 10/00, A21D 2/26, A23L 1/30, A23L 1/16, A21D 13/00, A21D 8/04, A23L 1/237

(54) **AGENT EXHAUSTEUR DE GOÛT, PÂTES BOULANGÈRES, PRODUITS DE PANIFICATION ET CÉRÉALIERS LE COMPRENANT, SON UTILISATION COMME SUBSTITUT DE NACL**
GESCHMACKSVERBESSERUNGSMITTEL, BACKWARENTEIGE, BROTBACK- UND GETREIDEPRODUKTE, DIE DIESES ENTHALTEN, SOWIE DEREN VERWENDUNG ALS NACL-ERSATZ
TASTE-ENHANCING AGENT, BAKING DOUGHS, BREADMAKING AND CEREAL PRODUCTS COMPRISING SAME, AND USE THEREOF AS AN NACL SUBSTITUTE

(30) Priorité: 10.02.2004 FR 0401258
(43) Date de publication de la demande: 25.10.2006
(73) Titulaire: Lesaffre et Compagnie, 75001 Paris (FR)
(72) Inventeur: DUPUY, Camille, F-59000 Lille (FR); LEJEUNE, Pascal, F-59200 Tourcoing (FR); MUCHEMBLED, Jean-Jacques, F-59700 Marcq-en-Baroeul (FR)
(74) Mandataire: Ahner, Francis
(86) Numéro de dépôt international: PCT/EP2005/001292
(87) Numéro de publication internationale: WO 2005/087013

(56) Documents cités:
- EP-A- 0 806 144
- EP-A- 1 352 564
- DE-A- 3 338 977
- GB-A- 2 315 008
- US-A- 4 093 748
- ZA-A- 9 400 543

## Description

La présente invention concerne un agent sec exhausteur de goût pour produit céréalier et notamment pour les produits cuits de boulangerie, un tel agent ayant en particulier la propriété d'augmenter la saveur salée, ainsi qu'un améliorant sec de panification comprenant cet agent exhausteur de goût.

De manière générale, l'agent sec exhausteur de goût selon l'invention améliore la qualité gustative des produits céréaliers tels que, par exemple, les produits cuits de boulangerie, quelle que soit leur dose de sel (NaCl). De plus, il permet d'abaisser la teneur en sel des produits céréaliers.

Traditionnellement, on ajoute, en panification, du sel à la pâte boulangère en tant qu'exhausteur de goût.

Il existe, depuis de nombreuses années, une demande visant à réduire la quantité de sel présente dans l'alimentation. La réduction de la teneur en sel des pains constituerait un pas important dans ce sens. Toutefois, la réduction de l'ajout de sel à la pâte boulangère conduit à des produits cuits fades, généralement peu appréciés par le consommateur.

Il a été proposé d'ajouter à la pâte boulangère de la farine fermentée en tant qu'exhausteur de goût.

Dans le cadre de la présente invention, la farine fermentée acide, appelée aussi farine fermentée déshydratée, correspond à un produit sec obtenu par séchage d'une pâte fermentée au moyen de microorganismes appartenant aux bactéries des levains panaires, et éventuellement, en plus, au moyen de levures des levains panaires. Les bactéries des levains panaires sont notamment décrites dans le Chapitre 4.2, et en particulier 4.2.3, du livre de référence « Handbuch Sauerteig - Biologie - Biochemie - Technologie » par Spicher et Stephan, 4ème édition (ISBN 3-86022-076-4). Ces bactéries sont dites lactiques car elles produisent de l'acide lactique lors de la fermentation de la pâte et contribuent ainsi à l'effet exhausteur du goût.

Selon l'invention, la farine fermentée est acide du fait de l'acide lactique qu'elle contient. Elle se distingue ainsi notamment du ferment sec décrit dans le brevet ZA-A-9 400 543 (Unilever) lequel, obtenu par fermentation uniquement par des levures, présente des propriétés très différentes.

La farine fermentée acide est généralement commercialisée sous les dénominations commerciales françaises : farine fermentée, farine pré-fermentée, levain sec ou levain déshydraté, sous les dénominations commerciales anglaises : dry ou dried sourdough, dry ou dried leaven ou levain, dry ou dried fermented flour, dry ou dried prefermented flour, sourdough concentrate, sourdough powder, et sour flour, et sous les dénominations allemandes Trockensauer et Sauerteigpulver.

L'utilisation de farine fermentée en tant que préparation ou agent aromatique en boulangerie conduit à des produits cuits présentant une saveur et une odeur acides prononcées ainsi que des notes aromatiques de type « grillé ». Si une telle saveur et une telle odeur acides sont fort appréciées pour certaines catégories spécifiques de produits cuits, elles ne le sont guère pour d'autres.

L'utilisation de farine fermentée en panification est donc limitée à une gamme particulière de produits cuits pour laquelle un goût acide est apprécié.

Il est connu que les extraits de levure présentent entre autre un effet exhausteur de goût. Par extrait de levure, on comprend la fraction soluble obtenue après hydrolyse enzymatique de cellules de levure appartenant de préférence au genre *Saccharomyces.*

Toutefois, l'utilisation d'extrait de levure en tant qu'exhausteur de goût en boulangerie tel que notamment décrit dans le brevet US-A-4 093 748 conduit à des produits cuits présentant des notes aromatiques particulières telles que notamment de « crackers fromage ». L'utilisation d'extrait de levure en tant qu'exhausteur de goût en boulangerie est donc également limitée à une gamme de produits cuits spécifiques, pour lesquels des notes « crackers fromage » sont souhaitées.

Il a aussi été proposé de réduire la teneur en sel des pains de 25% par la substitution de ces 25% en sel par un mélange de chlorure de potassium, de lactosérum et de dextrose.

GB-A-2 315 008 divulgue un procédé de préparation de pain précuit, comprenant l'utilisation d'un préferment comprenant des lactobacilles et de l'extrait de levure. Le produit cuit obtenu a un arôme et un goût supérieur aux produits de l'art antérieur.

L'emploi de chlorure de potassium est une solution classique dans le domaine de la fabrication des produits pauvres en sel (NaCl), car dans le sel de cuisine, c'est l'ion sodium qui peut être gênant pour la santé, mais cette solution classique a beaucoup d'inconvénients bien connus.

La présente invention concerne un agent sec exhausteur de goût spécifique pour produits céréaliers et notamment pour produits de boulangerie, un tel agent exhausteur de goût ayant en particulier la propriété d'augmenter la saveur salée.

La présente invention concerne notamment un agent sec exhausteur de goût pour produits céréaliers, et notamment pour produits cuits de boulangerie, qui comprend de la farine fermentée acide et de l'extrait de levure.

Des effets synergiques organoleptiques inattendus ont, en effet, été constatés entre, d'une part, la farine fermentée acide, et d'autre part, l'extrait de levure, quand ces deux agents sont utilisés en combinaison dans des mélanges ou pâtes pour produits céréaliers et notamment pour produits de boulangerie.

Ainsi, l'agent suivant l'invention peut être utilisé en tant qu'exhausteur de goût pour une large gamme de produits de boulangerie, sans que des notes généralement considérées comme gênantes ne se manifestent dans le produit cuit.

Selon l'invention, la farine fermentée acide, telle que définie ci-dessus, est obtenue par séchage d'une pâte fermentée comprenant une ou plusieurs farines de céréale(s) panifiable(s), une ou plusieurs issue(s) de meunerie riche(s) en son ou un mélange d'une ou plusieurs farines de céréale(s) panifiable(s) avec une ou plusieurs issue(s) de meunerie riche(s) en son. Un exemple d'une telle issue de meunerie est le son micronisé.

Ainsi, la farine fermentée acide peut être obtenue à partir d'une pâte fermentée comprenant de la farine de blé (= farine de froment) et/ou de la farine de seigle, une ou plusieurs issue(s) de meunerie riche(s) en son provenant de blé et/ou une ou plusieurs issue(s) de meunerie riche(s) en son provenant de seigle, ou une combinaison de farine(s) de blé et/ou de farine(s) de seigle avec une ou plusieurs issue(s) de meunerie riche(s) en son et provenant de blé et/ou de seigle.

De manière souhaitable, la farine fermentée acide présente une flore microbienne totale inférieure ou égale à 10⁶ UFC (Unités Formant Colonie)/g, de préférence inférieure ou égale à 10⁵ UFC/g, et encore de préférence inférieure ou égale à 10⁴ UFC/g.

Egalement selon l'invention, l'extrait de levure est de préférence la fraction soluble obtenue après autolyse desdites cellules de levure, c'est-à-dire après hydrolyse enzymatique effectuée uniquement par les enzymes endogènes de la levure.

L'hydrolyse des cellules de levure peut également être réalisée en faisant appel à des enzymes exogènes, c'est-à-dire en ajoutant des enzymes supplémentaires, comme notamment des protéases.

De préférence, l'extrait de levure est séparé de la partie insoluble des cellules de levure. Cependant, cette séparation de la fraction insoluble des cellules de levure, de la fraction solubilisée ayant l'effet exhausteur de goût recherché selon l'invention, est souhaitable, mais non indispensable. Préférentiellement, l'extrait de levure se présente sous la forme d'un extrait sec. L'invention englobe l'utilisation de tous les ingrédients connus comme ayant un effet exhausteur de goût équivalent à celui de l'extrait de levure.

Lesdites cellules de levures appartiennent le plus souvent à l'espèce *Saccharomyces cerevisiae,* appelée souvent *Saccharomyces carlsbergensis* quand il s'agit de levure de bière, l'appellation taxonomique, exacte étant *Saccharomyces cerevisiae* selon « THE YEASTS, a taxonomic study », 3éme édition, édité par N.J.W. Kreger van Rij - 1984 (par contre selon la 4^{éme} édition de cet ouvrage de 1998, *Saccharomyces carlsbergensis* a deux synonymes *Saccharomyces cerevisiae* et *Saccharomyces pastorianus,* c'est la 3^{ème} édition de cet ouvrage datant de 1984 qui est prise comme référence dans le présent document). Si l'extrait de levure comprend ou est un extrait de levure de brasserie, c'est-à-dire un extrait d'une levure ayant déjà servi pour la fermentation en brasserie, il peut être utile de désamériser l'extrait de levure avant son utilisation dans le cadre de la présente invention. Les extraits de levure(s) de brasserie sont généralement caractérisés par la présence d'une quantité détectable d'humulones, quantité dont, de préférence, il est souhaitable qu'elle soit la plus faible possible.

L'agent selon l'invention présente, de manière avantageuse, un rapport en poids entre les matières sèches de farine fermentée acide et les matières sèches d'extrait de levure de 0,8 à 2,6 ; de préférence de 1,0 à 2,3 ; encore de préférence de 1,2 à 2,0 ; et encore plus de préférence de 1,2 à 1,8.

Comme déjà indiqué ci-dessus, la farine fermentée acide présente dans l'agent suivant l'invention peut être issue d'une pâte fermentée comprenant une ou plusieurs farines de céréale(s), comprenant une ou plusieurs issue(s) de meunerie riche(s) en son ou comprenant une combinaison d'une ou plusieurs farine(s) de céréale(s) avec une ou plusieurs issue(s) de meunerie riche(s) en son, cette pâte pouvant contenir aussi des germes de céréales. De préférence, la farine fermentée acide est issue d'une pâte fermentée comprenant de la farine de blé et/ou de la farine de seigle, une ou plusieurs issue(s) de meunerie riche(s) en son provenant de blé et/ou une ou plusieurs issue(s) de meunerie riche(s) en son provenant de seigle, ou une combinaison de farine(s) de blé et/ou de farine(s) de seigle avec une ou plusieurs issue(s) de meunerie riche(s) en son et provenant de blé et/ou de seigle. La pâte peut également contenir des germes de blé broyés.

La dose d'acide lactique dans la farine fermentée acide est avantageusement supérieure ou égale à 50 g par kg de farine fermentée, et plus avantageusement d'au moins 70 g par kg de farine fermentée, et encore plus avantageusement d'au moins 100 g par kg de farine fermentée.

L'agent selon l'invention contient un extrait d'une levure de préférence appartenant au genre *Saccharomyces* et encore de préférence appartenant à l'espèce *Saccharomyces cerevisiae,* y compris celle appelée *Saccharomyces carlsbergensis.* Ledit extrait de levure de l'agent selon l'invention peut notamment contenir et/ou être un extrait de levure de brasserie, cet extrait de levure de brasserie étant de préférence désamérisé, cette désamérisation pouvant être réalisée par des techniques habituelles et bien connues.

L'extrait de levure contenu dans l'agent selon l'invention est de préférence un extrait de levure obtenu sans ajout de sel. De préférence, quand l'extrait de levure comprend ou est un extrait de levure de brasserie, l'extrait de levure de brasserie sera jugé par un jury de dégustation comme très peu amer. De préférence, l'extrait de levure contenu dans l'agent selon l'invention sera jugé par un tel jury de dégustation comme n'ayant pas ou ayant peu de notes de type « lacté », « beurré », « fromage » et de manière générale comme ayant un profil gustatif neutre sans note marquée.

L'agent sec peut se présenter par exemple sous forme pulvérulente ou en granules. Sa teneur en matières sèches est avantageusement supérieure ou égale à 85%, de préférence, supérieure ou égale à 90%, encore préférentiellement supérieure ou égale à 93%, voire supérieure ou égale à 96% en masse.

L'agent selon l'invention peut être incorporé dans la formule d'un améliorant sec pour produit cuit de boulangerie. Un tel améliorant sec selon l'invention comprend également un ou plusieurs ingrédients présentant un effet d'améliorant, et notamment un ou plusieurs ingrédients choisis dans le groupe consistant en l'acide ascorbique, des émulsifiants, des agents stabilisants-épaississants et des enzymes. L'améliorant sec selon l'invention peut ainsi comprendre un ou plusieurs ingrédients présentant un effet d'améliorant, tels que :
- l'acide ascorbique,
- la L-cystéine, ou la levure désactivée,
- des agents stabilisants - épaississants comme :
   - la farine pré-gélatinisée, les amidons modifiés,
   - le CMC (carboxyméthylcellulose),
   - des gommes, comme par exemple la gomme de xanthane,
   - des extraits d'algues comme des alginates ou des carraghénates,
   - ou une combinaison de ces différents agents stabilisants-épaississants,
- des émulsifiants, comme par exemple :
   - la lécithine ou
   - les mono- et diglycérides d'acides gras ou
   - les esters diacétyltartriques de mono- et diglycérides d'acides gras, etc,
   - ou encore une combinaison d'un ou plusieurs émulsifiants comme ceux cités ci-avant,
- des enzymes, comme par exemple :
   - des amylases, et en particulier des alpha-amylases, dont par exemple des alpha-amylases maltogènes ou d'autres alpha-amylases antirassissantes,
   - des hémicellulases, et en particulier les xylanases,
   - des glucose oxydases,
   - des amyloglucosidases,
   - des lipases,
   - des phospholipases, etc,
- des germes de blé toastés,
- de la farine de blé malté torréfié(e),
- des farines de céréales ou d'autres ingrédients caractéristiques de la composition de pains spéciaux.

L'améliorant sec peut également comprendre un ou plusieurs autres ingrédients non spécifiés ci-dessus. De préférence, l'améliorant sec selon l'invention se présente sous forme pulvérulente ou en granules. Sa teneur en matières sèches est, avantageusement supérieure ou égale à 85%, de préférence, supérieure ou égale à 90%, encore préférentiellement supérieure ou égale à 93%, voire supérieure ou égale à 96% en masse.

Un améliorant sec pour pain courant français selon l'invention comprend par exemple de la farine fermentée acide, un extrait de levure, ces deux ingrédients formant l'agent sec selon l'invention, de l'acide ascorbique, des alpha-amylases et/ou des xylanases. Il peut comprendre éventuellement en plus un ou plusieurs des ingrédients suivants : de la levure désactivée, de la lécithine et/ou des mono- et diglycérides d'acides gras, des phospholipases, des lipases.

Ledit améliorant sec pour pain courant français, c'est-à-dire pour pain ne contenant ni matière grasse ni sucre ajouté, conforme aux usages français ou au moins de type français, sera utilisé de préférence à un pourcentage du boulanger, c'est-à-dire à un pourcentage en masse par rapport à la farine non fermentée, compris entre 1 et 10%, de préférence entre 1 et 5%, encore de préférence entre 1,3 et 5%, et encore plus de préférence entre 1,5 et 2%. Ledit améliorant sec peut être utilisé de la même manière pour la réalisation de produits de boulangeries contenant ou non du sucre ajouté à la pâte et/ou de la matière grasse ajoutée à la pâte, ladite pâte pouvant être cuite en moule ou hors moule.

De préférence, la teneur en sodium de l'agent sec ou de l'améliorant sec selon l'invention est inférieure à 1,0% en masse sur matières sèches, encore de préférence inférieure à 0,4% et encore plus de préférence inférieure à 0,2%.

L'invention concerne un procédé pour la préparation d'une pâte boulangère comprenant le mélange d'ingrédients spécifiques.

L'invention concerne notamment un procédé pour la préparation d'une pâte boulangère avec des ingrédients comprenant au moins de la farine non-fermentée, de l'eau, de la levure de panification, c'est-à-dire de la levure active, de la farine fermentée acide telle que décrite ci-dessus en rapport à l'agent sec selon l'invention et de l'extrait de levure, également tel que décrit ci-dessus en rapport à l'agent sec selon l'invention.

L'eau de la pâte peut être incorporée dans la pâte en tant que telle ou encore partiellement ou totalement sous forme d'un mélange avec d'autres ingrédients ou sous forme d'un ingrédient à humidité élevée, comme par exemple du lait.

La levure de panification est par définition la levure active ou vivante qui va assurer la fermentation de la pâte.

Dans ce procédé, les ingrédients de la pâte présentent de manière avantageuse un rapport en poids entre les matières sèches de la farine fermentée acide et les matières sèches de l'extrait de levure de 0,8 à 2,6 ; de préférence de 1,0 à 2,3 ; encore de préférence de 1,2 à 2,0 ; et encore plus de préférence de 1,2 à 1,8.

De manière utile, au moins une partie, et de préférence la totalité, de la farine fermentée acide et de l'extrait de levure des ingrédients de la pâte, est utilisée dans le procédé sous forme d'un agent sec et/ou d'un améliorant sec selon l'invention.

Suivant l'invention, la pâte peut être préparée par un procédé direct de panification dit « straight dough» ou par un procédé indirect comme le procédé dit « sponge et dough », ou par tout autre procédé de panification. De préférence, le procédé de panification selon l'invention est un procédé direct de panification, c'est-à-dire un procédé comprenant un seul pétrissage.

Selon l'invention et conformément à la pratique, on entendra par procédé indirect dit « sponge and dough », une méthode de fabrication du pain, dans laquelle une première étape consiste à mélanger de l'eau, une partie de la farine, et habituellement la totalité de la levure de panification et des ingrédients nutritifs utiles pour la levure, réalisant ainsi un sponge. Ce mélange est mis à fermenter jusqu'à ce qu'on le juge prêt à être utilisé pour réaliser la pâte par incorporation des autres ingrédients du pain (définition extraite du livre « Glossary of Milling and Baking terms », Samuel A. MATZ, Pan-Tech International, 1993).

Selon une forme de réalisation avantageuse, les ingrédients de la pâte présentent un rapport en poids entre, d'une part, la totalité des matières sèches de la farine fermentée acide et de l'extrait de levure, et d'autre part, la farine non-fermentée, de 0,8 à 2,5%, de préférence de 1,0 à 1,5%, et encore de préférence de 1,15 à 1,35%. Ces pourcentages correspondent aux pourcentages du boulanger où tous les pourcentages sont ramenés par rapport à 100 parties en poids de farine apportées dans la recette par le boulanger, cette farine étant par définition non fermentée.

Par exemple, un améliorant sec pour pain courant français apportera pour 100 parties en masse ou 100 kg de farine non fermentée selon le pourcentage du boulanger :
- 1% à 1,8% de matières sèches de l'agent sec selon l'invention consistant en de la farine fermentée acide et de l'extrait de levure (soit 1 kg à 1,8 kg de matières sèches pour 100 kg de farine),
- 0,005% à 0,020% d'acide ascorbique (soit 0,005 kg à 0,020 kg pour 100 kg de farine), de préférence de 0,005% à 0,015% d'acide ascorbique,
- 0% à 0,3% de mono-glycérides d'acides gras saturés (soit 0 kg à 0,3 kg pour 100 kg de farine),
- des alpha-anylases fongiques et/ou des xylanases,
- un support ou agent solide de dilution pour que l'améliorant sec puisse être utilisé à un pourcentage du boulanger facile à doser, comme par exemple un pourcentage entre 1% et 10%, de préférence entre 1,5% et 5%, et en particulier un tel pourcentage en chiffre rond, comme par exemple 2%, 5% ou 10%.

Lorsque l'améliorant sec est présenté sous forme de poudre, ce support pourra être par exemple de la farine étuvée.

Par exemple, un améliorant sec pour pain européen de type non français apportera pour 100 parties ou 100 kg de farine non fermentée selon le pourcentage du boulanger :
- 1% à 1,5% de matières sèches de l'agent sec selon l'invention consistant en de la farine fermentée acide et de l'extrait de levure (soit 1 kg à 1,5 kg de matières sèches pour 100 kg de farine),
- 0,005% à 0,020% d'acide ascorbique (soit 0,005 kg à 0,020 kg pour 100 kg de farine), de préférence de 0,006% à 0,012% d'acide ascorbique,
- 0,05% à 0,20% d'esters diacétyl-tartriques de mono-et di-glycérides (émulsifiant E472e ou f) (soit 0,05 kg à 0,20 kg pour 100 kg de farine),
- une ou plusieurs alpha-amylases dont de préférence une alpha-amylase antirassissante, des xylanases, des lipases ou phospholipases ayant un effet renforçateur du réseau du gluten,
- 0% à 0,20% d'un ou plusieurs agents stabilisants-épaississants, assurant le moelleux du pain ou facilitant un procédé de panification faisant appel à la congélation ou la surgélation, comme des gommes ou des extraits d'algues, soit 0 kg à 0,20 kg pour 100 kg de farine,
- un support ou agent solide de dilution pour que l'améliorant sec puisse être utilisé à un pourcentage du boulanger facile à doser, tel qu'un pourcentage entre 1% et 10%, de préférence entre 1,5% et 5%, par exemple 2%, 5% ou 10%.

Lorsque l'améliorant sec est présenté sous forme de poudre, ce support pourra être par exemple de la farine étuvée.

Par exemple, dans les pains tels que fabriqués aux Etats-Unis d'Amérique, selon un schéma « SPONGE AND DOUGH » (« levain-levure » en français) ou « NO-TIME DOUGH » (« sans temps de fermentation de la pâte en masse » en français), la formule comprendra en général pour 100 parties ou 100 kg de farine non fermentée selon le pourcentage du boulanger au moins :
- 0,8% à 2% de matières sèches de l'agent sec selon l'invention consistant en de la farine fermentée acide et de l'extrait de levure (soit 0,8 kg à 2 kg de matières sèches pour 100 kg de farine),
- un mélange d'oxydant(s) et de réducteur(s) comme par exemple un mélange d'acide ascorbique et de L-cystéine,
- un ou plusieurs agents de texture, comme par exemple un émulsifiant comme le stearoyl-2-lactylate de calcium,
- un conservateur, comme le propionate de calcium,
- une ou plusieurs préparations enzymatiques comme des enzymes antirassissantes, des amylases, des hemicellulases, des lipases ou phospholipases.

Ces ingrédients peuvent être apportés dans le procédé de panification américain, soit sous forme séparée, soit sous forme d'un améliorant sec, soit sous forme de pré-mélange plus ou moins complet comprenant par exemple la levure de panification et une grande partie de la farine. Les pâtes pour les pains tels que fabriqués aux Etats-Unis d'Amérique selon l'invention contiendront de préférence une quantité de sucre ajouté variant de 4 à 16% en matières sèches en pourcentages de boulanger, et/ou une quantité de matières grasses ajoutées, par exemple l'huile, variant de 2% à 6% en pourcentage de boulanger.

Il est à noter que l'intérêt du procédé selon l'invention réside essentiellement dans la préparation de pâtes qui ne sont pas des pâtes à levain acide. Ainsi, ces pâtes ne contiennent pas de bactéries lactiques en tant qu'agent de fermentation, à la différence des pâtes à levain acide, autrement dénommé « sourdough ».

L'invention concerne également les pâtes boulangères obtenues par ou susceptibles d'être obtenues par un tel procédé selon l'invention, ainsi que les procédés d'obtention d'un produit cuit de boulangerie dans lesquels on cuit une telle pâte boulangère au four.

L'invention concerne en particulier de telles pâtes crues surgelées (en anglais : frozen doughs).

L'invention concerne également des pâtons précuits (en anglais : parbaked doughs), ou des pâtons précuits surgelés (en anglais : parbaked frozen doughs), obtenus par pré-cuisson et surgélation de telles pâtes.

Le produit cuit peut être un pain, de préférence une baguette, une viennoiserie, une brioche, etc.

En particulier, selon le procédé suivant l'invention, le produit cuit peut appartenir au groupe comprenant les pains de type français, de préférence des pains courants français, de préférence sous forme de baguettes, les viennoiseries, les brioches, les pains spéciaux et en général, tous les pains de type non français comportant des matières grasses et/ou du sucre ajouté, les pains tels que fabriqués aux Etats-Unis d'Amérique obtenus par le procédé levain-levure ou Sponge and Dough, les pains tels que fabriqués aux Etats-Unis d'Amérique obtenus selon le procédé sans temps de fermentation de pâte en masse ou No Time Dough.

L'invention fournit en particulier au boulanger un procédé pour la réduction de la teneur en sel dans la pâte boulangère et/ou dans le produit cuit de boulangerie par la mise en oeuvre d'un procédé tel que défini ci-dessus. La présente invention permet notamment de réduire la teneur en sel (exprimée en NaCl mesuré par la teneur en sodium ou Na⁺) sur matières sèches dans la pâte boulangère et/ou dans le produit cuit, à 2,1% en masse ou moins, de préférence à 2,0% en masse ou moins, et encore de préférence à 1,8% en masse ou moins, et encore plus de préférence inférieure ou égale à 1,6% en masse, tout en obtenant un produit cuit de bonne qualité gustative.

Grâce à la présente invention, le boulanger dispose maintenant d'une pâte pour produit cuit de boulangerie comprenant :
- de la farine de céréale(s) non-fermentée,
- de la levure de panification, c'est-à-dire de la levure active,
- une teneur en NaCl ajouté inférieure ou égale à 1,8%; de préférence inférieure ou égale à 1,6%, et encore de préférence inférieure ou égale à 1,5% en masse par rapport à la farine non-fermentée (pourcentage du boulanger), le sel ajouté sous forme de NaCl étant le sel ajouté directement ou indirectement par les ingrédients de la pâte quand ceux-ci contiennent une teneur en NaCl supérieure à leur teneur naturelle, et en tout état de cause supérieure à 1 % en masse,
- une quantité de farine fermentée acide de manière à obtenir, après fermentation et cuisson de la pâte, un produit cuit ayant une teneur en acide lactique sur mie d'au moins 500 ppm, de préférence de 500 à 3000 ppm, encore de préférence de 750 à 2500 ppm,
- de l'extrait de levure,
la farine fermentée acide et l'extrait de levure de cette pâte étant de la farine fermentée acide et de l'extrait de levure tels que définis ci-dessus pour l'agent sec selon l'invention.

L'invention permet également au boulanger de réaliser des produits cuits de bonne qualité avec des pâtes comprenant de la farine de céréale(s) non-fermentée, de la levure de panification, de la farine fermentée acide, et de l'extrait de levure, et qui présente une teneur en sodium ou Na⁺ inférieure ou égale à 0,50% ; de préférence inférieure ou égale à 0,45%, et encore de préférence inférieure ou égale à 0,43% en masse par rapport à la pâte, ces pourcentages étant calculés en masse (quantité en masse de sodium par rapport à la quantité en masse de pâte à la fin du dernier pétrissage ou telle que prête à cuire). Lesdites pâtes contiennent de préférence une quantité de farine fermentée acide telle qu'elles ont une teneur en acide lactique d'au moins 300 ppm, de préférence de 350 à 2500 ppm, encore de préférence de 500 à 2000 ppm.

Selon un aspect particulièrement intéressant de la présente invention, la pâte est une pâte congelée. Un autre domaine intéressant de l'invention concerne des pâtons précuits surgelés pouvant être obtenus par fermentation, pré-cuisson et surgélation d'une pâte selon l'invention.

L'invention concerne également les produits cuits de boulangerie susceptibles d'être obtenus par la fermentation et la cuisson d'une pâte selon l'invention, ces produits cuits pouvant notamment être des pains, de préférence des baguettes, des viennoiseries et/ou des brioches.

De manière avantageuse, le produit cuit selon l'invention est un produit cuit à base de farine de céréale(s) non-fermentée, de levure de panification, de farine fermentée acide, et d'extrait de levure, et ayant une teneur en sodium ou Na⁺ inférieure ou égale à 0,60% ; de préférence inférieure ou égale à 0,58%, et encore de préférence inférieure ou égale à 0,55% et encore plus de préférence inférieure ou égale à 0,52%, en masse par rapport à la masse du produit cuit, la farine fermentée acide et l'extrait de levure tels que respectivement définis ci-dessus dans le contexte de l'agent sec selon l'invention.

Le produit cuit présente de préférence une teneur en acide lactique sur mie d'au moins 500 ppm, de préférence de 500 à 3000 ppm, encore de préférence de 750 à 2500 ppm.

De préférence, le procédé de préparation d'un produit cuit de panification selon l'invention à partir d'une pâte selon l'invention est un procédé de préparation d'un pain courant français ou au moins de type français, sans aucun ajout de matières grasses ou de sucres ou de produits laitiers.

De préférence, les produits cuits de panification selon l'invention sont des pains courants français ou au moins de type français comme la baguette. Cependant, l'invention n'est pas limitée à ces applications de l'agent sec exhausteur de goût selon l'invention et englobe tous les procédés, toutes les pâtes, et tous les produits de panification et utilisations comprenant le nouvel agent sec exhausteur de goût pour la panification selon l'invention.

L'invention englobe également l'application de l'agent sec selon l'invention comme agent augmentant la saveur salée et/ou permettant en conséquence d'abaisser la dose de sodium ou Na⁺ tout en gardant une saveur salée équivalente, dans tous les produits céréaliers autres que pâtes pour produits de boulangerie et produits cuits de boulangerie comme les produits de la biscuiterie, les pâtes alimentaires (spaghetti, macaroni, nouilles,...) et, de manière générale, toute application de l'agent sec selon l'invention pour réaliser des produits alimentaires appauvris en sel (NaCl), c'est-à-dire comme substitut de sel de cuisine (NaCl).

L'invention concerne également l'utilisation d'un agent sec selon l'invention ou d'un améliorant sec suivant l'invention, et tels que précédemment définis, pour la préparation de pâtes pour produits cuits contenant un agent levant choisi parmi la poudre à lever, autrement appelée levure chimique (en anglais : chemical leavening), la levure de panification et leur combinaison, et en particulier pour la préparation de pâtes laminées. Les produits cuits correspondants sont en effet souvent très riches en sodium, et la présente invention permet ainsi d'en réduire la teneur tout en conservant le goût salé apprécié.

L'invention couvre ainsi un procédé de préparation pour produits cuits comprenant :
- la préparation d'une pâte contenant de la farine non-fermentée, de l'eau, de la farine fermentée acide, de l'extrait de levure et un agent levant choisi parmi la levure de panification, la poudre à lever (levure chimique) et leur combinaison,
- la levée de la pâte au moyen de l'agent levant, et,
- la cuisson de la pâte levée,
ledit procédé comprenant éventuellement un laminage de la pâte entre les étapes de préparation et de levée.

Les avantages de la présente invention sont illustrés plus clairement dans les exemples fournis ci-après dans le domaine de la boulangerie.

### EXEMPLE 1

### Exemple selon l'invention et exemples comparatifs C1 et C2

Un agent sec exhausteur de goût suivant l'invention est préparé en mélangeant une farine de seigle fermentée acide avec un extrait de levure.

La farine fermentée acide présente dans l'agent sec suivant l'invention est obtenue par séchage d'une pâte à base de son de seigle micronisé fermentée par des bactéries lactiques de levain. L'extrait de levure présent dans l'agent sec suivant l'invention est un autolysat d'une levure de brasserie appartenant à l'espèce *Saccharomyces cerevisiae.*

L'extrait de levure est un extrait de levure fabriqué sans ajout de sel. Il s'agit d'un extrait de levure commercial développant des notes de type « acide », « amer » (très faible), « viandé », « beurré », « bouillon », « rôti », « grillé », ce qui correspond au profil classique d'un extrait de levure commercial sans note particulièrement marquée.

L'agent sec suivant l'invention présente une teneur totale en matières sèches d'au moins 90% en masse, dont 60% en masse sont des matières sèches de la farine fermentée acide et 40% en masse sont des matières sèches de l'extrait de levure.

L'agent sec suivant l'invention est utilisé dans la préparation de baguettes à une dose de 1,25 kg de matières sèches sur 100 kg de farine non-fermentée mise en oeuvre.

Les résultats obtenus au moyen de l'agent sec suivant l'invention sont comparés avec les résultats obtenus dans les mêmes conditions au moyen d'une farine fermentée classique du commerce et d'un extrait de levure classique ou standard du commerce, ayant chacun une teneur en matières sèches supérieure ou égale à 90% en masse.

La farine fermentée classique du commerce utilisée à titre de premier exemple comparatif, est la farine fermentée commercialisée par la société LESAFFRE INTERNATIONAL, Division Ingrédients, à Marcq-en-Baroeul, France, ou le GIE LESAFFRE à Maisons-Alfort, France, sous la dénomination commerciale Arôme Levain^{®} S400) (exemple comparatif C1).

L'exhausteur de goût connu en tant que tel, et utilisé à titre de second exemple comparatif, est l'extrait de levure standard commercialisé par la société BIO SPRINGER, à Maisons-Alfort, France, sous la dénomination commerciale Springer^{®} type 101 (exemple comparatif C2), la société BIO SPRINGER étant le principal fournisseur mondial d'extraits de levure.

L'améliorant IBIS bleu^{®} est un améliorant de formulation classique pour pain courant français, commercialisé par le GIE LESAFFRE, à Maisons-Alfort, France, et par LESAFFRE INTERNATIONAL, Division Ingrédients, à Marcq-en-Baroeul, France. Cet améliorant apporte notamment les doses nécessaires d'acide ascorbique et de préparations enzymatiques pour obtenir des pains de qualité avec le schéma ci-dessous.

La levure fraîche de panification ou levure pressée de panification est une levure à environ 30% de matières sèches, vendue sous la marque "L'HIRONDELLE"^{®} bleu par le GIE LESAFFRE à Maisons Alfort, France.

Les formules de la pâte contenant l'agent sec suivant l'invention et des pâtes selon les exemples comparatifs, exprimées comme d'habitude dans le domaine technique en pourcentage du boulanger, c'est-à-dire en parties en masse de l'ingrédient pour 100 parties en masse de farine de céréale(s) non-fermentée mise en oeuvre, sont données dans le tableau 1 ci-après.

**Tableau 1**

| | Baguette selon l'invention | Baguette de l'ex. comp. C1 | Baguette de l'ex. comp. C2 |
|---|---|---|---|
| Farine de froment type 55 | 100,0 | 100,0 | 100,0 |
| Eau | 64,0 | 64,0 | 64,0 |
| Sel | 1,8 | 1,8 | 1,8 |
| Améliorant de panification IBIS^{®} bleu | 1,0 | 1,0 | 1,0 |
| Levure fraîche (à environ 30% de matières sèches) "L'HIRONDELLE"^{®} bleu | 2,5 | 2,5 | 2,5 |
| Arôme levain^{®} S400 | | 2,0 | |
| Extrait de levure SPRINGER^{®} type 101 | | | 0,8 |
| Agent* sec selon l'invention exprimé en matières sèches | 1,25 | | |

| | | | |
|---|---|---|---|
| (*) 60%(M.S.) de farine de seigle fermentée acide et 40%(M.S.) d'extrait de levure, teneur en sodium : < 0,4% en masse sur matières sèches | | | |

Le schéma de fabrication, utilisé pour l'exemple selon l'invention et pour les deux exemples comparatifs, schéma proche d'un schéma industriel, est le suivant :

| | |
|---|---|
| Frasage : | 4 minutes en 1^{ère} vitesse sur pétrin à spirale modèle SPI 10 VMI^{®} |
| Pétrissage : | 5 minutes en 2^{éme} vitesse sur pétrin à spirale modèle SPI 10 VMI^{®} |
| Pointage : | 0h20 |
| Pesage/boulage : | poids pâton : 180g |
| Détente : | 0h40 |
| Façonnage manuel : | en bâtard |
| Apprêt : | 1h45 |
| Cuisson : | 0h20 à 205°C avec buée |

Les baguettes obtenues ont été soumises à un test de dégustation par un ensemble de 12 experts, ci-après appelé « panel ».

Le panel était un panel spécifiquement formé pour la dégustation et l'évaluation des propriétés organoleptiques des pains.

Ce type de formation se déroule classiquement en deux phases :
- première phase : mise en place d'un vocabulaire commun de descripteurs issus d'une dégustation de produits divers de la même gamme.
- deuxième phase : classement des produits suivant les descripteurs choisis par le panel afin de quantifier l'intensité aromatique de chaque descripteur.

Le vocabulaire déterminé par le panel dans le cadre de cette étude est le suivant :
- saveur salée
- odeur de levure
- odeur de crackers fromage
- arôme crackers fromage
- arôme miel, épices
- saveur acide
- odeur acide
- odeur fruitée
- arôme herbe
- arôme céréales.

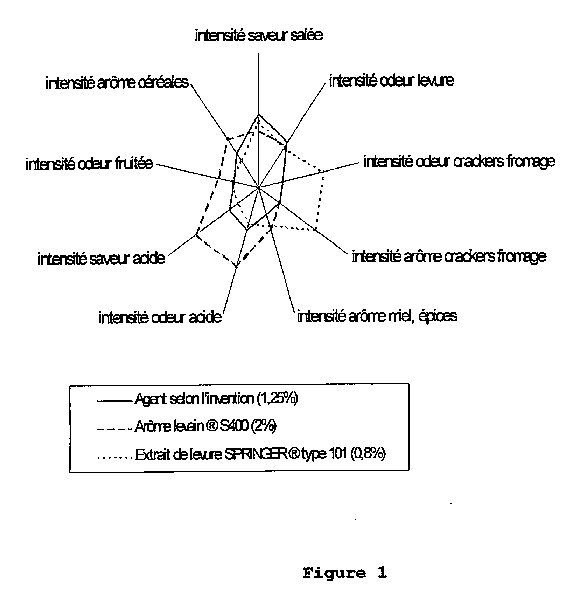

Les résultats obtenus avec l'exemple selon l'invention et les deux exemples comparatifs sont donnés dans le tableau 2 et illustrés dans la figure 1.

**Tableau 2**

| Intensité | Baguette selon l'invention | Baguette de l'ex. comp. C1 | Baguette de l'ex. comp. C2 |
|---|---|---|---|
| Odeur levure | 4,3 | 4,1 | 3,8 |
| Arôme céréales | 3,3 | 4,7 | 2,7 |
| Odeur crackers fromage | 2,3 | 2,3 | 6,3 |
| Arôme crackers fromage | 2,3 | 2,3 | 6,3 |
| Odeur acide | 3,3 | 6,3 | 2,9 |
| Saveur acide | 3,3 | 6,9 | 2,4 |
| Odeur fruitée | 2,4 | 4,0 | 2,7 |
| Arôme herbe | 2,1 | 3,6 | 2,6 |
| Arôme miel, épices | 2,1 | 3,3 | 3,0 |
| Saveur salée | 5,5 | 4,3 | 4,8 |

### EXEMPLE 2

### Capacité de l'agent sec suivant l'invention à augmenter la saveur salée d'un produit cuit de boulangerie.

Cinq séries de baguettes ont été fabriquées en utilisant le schéma de fabrication décrit ci-dessus dans l'exemple 1.

Les formules des pâtes correspondantes sont données ci-après dans le tableau 3.

**Tableau 3**

| | Baguette selon l'invention | Baguette de l'ex. comp. C3 | Baguette de l'ex. comp. C4 | Baguette de l'ex. comp. C5 | Baguette de l'ex. comp. C6 |
|---|---|---|---|---|---|
| Farine de froment type 55 | 100,0 | 100,0 | 100,0 | 100,0 | 100,0 |
| Eau | 64,0 | 64,0 | 64,0 | 64,0 | 64,0 |
| Sel | 1,8 | 1,5 | 1,8 | 2,1 | 2,4 |
| Levure fraîche "L'HIRON-DELLE"^{®} bleu | 2,0 | 2,0 | 2,0 | 2,0 | 2,0 |
| Améliorant de panification IBIS^{®} bleu | 1,0 | 1,0 | 1,0 | 1,0 | 1,0 |
| Agent sec selon l'invention en matières séches (*) | 1,25 | 0,0 | 0,0 | 0,0 | 0,0 |

| | | | | | |
|---|---|---|---|---|---|
| (*) 60%(M.S.) de farine de seigle fermentée acide et 40%(M.S.) d'extrait de levure, teneur en sodium ; < 0,4% en masse sur matières sèches | | | | | |

Les cinq séries de baguettes obtenues ont été dégustées par un panel de dix experts, qui a classé ces cinq séries de baguettes selon l'intensité de leur saveur salée.

Les cinq séries de baguettes ont été classées dans l'ordre suivant allant de la saveur salée la plus basse à la saveur salée la plus intense : baguette C3 (1,5% de sel/farine), baguette C4 (1,8% de sel/farine), baguette C5 (2,1% de sel/farine), baguette selon l'invention, baguette C6 (2,4% de sel/farine).

On note qu'aucune différence significative en saveur salée n'était observée entre la série de baguettes selon l'invention (à 1,8% sel/farine) et la série de baguettes comparative C5 (à 2,1 % sel/farine). Par contre, la saveur salée de la série de baguettes selon l'invention (à 1,8% sel/farine) était nettement plus prononcée que celle de la série de baguettes comparative C4 (également à 1,8% sel/farine).

Le bilan complet des apports de sodium dans la série de baguettes réalisée avec l'agent sec suivant l'invention est donné dans le tableau 4.

**Tableau 4**

| | Teneur (pourcentage du boulanger), | Teneur en sodium de l'ingrédient (% en masse) | Apport de sodium (pourcentage du boulanger) |
|---|---|---|---|
| Farine de froment type 55 | 100,0 | 0,003 | 0,0030 |
| Eau | 64,0 | 0,000 | 0,0000 |
| Sel | 1,8 | 39,337 | 0,7081 |
| Levure fraîche "L'HIRONDELLE"^{®} bleu | 2,0 | 0,025 | 0,0005 |
| Améliorant de panification IBIS^{®} bleu | 1,0 | 0,003 | 0,0000 |
| Matières sèches de l'agent sec selon l'invention | 1,25 (dont 0,75 de farine fermentée acide et 0,50 d'extrait de levure exprimés en matières sèches) | 0,158 | 0,0020 |
| **Total** | **170,05** | | **0,7136** |
| Total sodium dans recette (pourcentage du boulanger) | | | 0,72 |
| Total sodium pour 100 g de pâte | | | 0,42 g |
| Total sodium pour 100 g de pain | | | 0,54 g |
| Total NaCl pour 100 g de pain (calculé sur base de la teneur en sodium) | | | 1,38 g |
| Part du sodium ou NaCl présent hors ajout de sel par rapport au sel (NaCl) total | | | 0,8% |

On constate un effet synergique significatif entre les deux ingrédients : farine de blé fermentée acide et extrait de levure de l'agent sec exhausteur de goût selon l'invention.

En effet, on constate notamment que :
- l'intensité de la saveur salée obtenue avec l'agent sec selon l'invention dépasse l'intensité de la saveur salée qui était à prévoir sur la base des ingrédients de l'agent et leurs quantités respectives utilisées,
- les intensités de l'odeur et de l'arôme « crackers-fromage » obtenues avec l'agent sec suivant l'invention sont inférieures aux intensités qui étaient à prévoir.

La présente invention constitue ainsi une amélioration nette par rapport à l'état de la technique, notamment en réalisant un effet exhausteur de goût sur une vaste gamme de produits de boulangerie.

En particulier, la présente invention permet de réaliser un effet exhausteur de goût sur une vaste gamme de produits de boulangerie, tout en permettant de réduire l'ajout de sel à la pâte boulangère.

Ces constatations sont valables pour tous les produits céréaliers, comme les produits de biscuiterie et les pâtes alimentaires.

## Revendications

1. Agent sec exhausteur de goût pour produit céréalier, de préférence pour produit cuit de boulangerie comprenant de la farine fermentée acide, **caractérisé en ce qu'**il comprend également de l'extrait de levure.

2. Agent sec selon la revendication 1, **caractérisé en ce qu'**il présente une teneur en matières sèches supérieure ou égale à 85%, préférentiellement supérieure ou égale à 90%, de préférence supérieure ou égale à 93%, encore de préférence supérieure ou égale à 96% en masse.

3. Agent sec selon l'une quelconque des revendications précédentes, **caractérisé en ce qu'**il présente un rapport en poids exprimé en matières sèches entre, d'une part, la farine fermentée acide et, d'autre part, l'extrait de levure de 0,8 à 2,6 ; de préférence de 1,0 à 2,3 ; encore de préférence de 1,2 à 2,0 ; et encore plus de préférence de 1,2 à 1,8.

4. Agent sec selon l'une quelconque des revendications précédentes, **caractérisé en ce que** la farine fermentée acide est issue d'une pâte fermentée comprenant une ou plusieurs farine(s) de céréale(s) panifiable(s), une ou plusieurs issue(s) de meunerie riche(s) en son, ou comprenant un mélange d'une ou plusieurs farine(s) de céréale(s) panifiable(s) avec une ou plusieurs issue(s) de meunerie riche(s) en son.

5. Agent sec selon l'une quelconque des revendications précédentes, **caractérisé en ce que** la farine fermentée présente une dose d'acide lactique supérieure ou égale à 50 g par kg, de préférence supérieure ou égale à 70 g par kg et encore de préférence supérieure ou égale à 100 g par kg.

6. Agent sec selon l'une quelconque des revendications précédentes, **caractérisé en ce qu'**il comprend un extrait d'une levure appartenant au genre *Saccharomyces,* de préférence à l'espèce *Saccharomyces cerevisiae.*

7. Agent sec selon l'une quelconque des revendications précédentes, **caractérisé en qu'**il contient un extrait de levure de brasserie.

8. Améliorant sec pour produit cuit de boulangerie comprenant un agent sec suivant l'une quelconque des revendications 1 à 7.

9. Améliorant sec suivant la revendication 8, comprenant également un ou plusieurs ingrédients choisis dans le groupe consistant en l'acide ascorbique, des émulsifiants, des agents stabilisants-épaississants et des enzymes.

10. Procédé de préparation d'une pâte boulangère avec des ingrédients comprenant au moins de la farine non-fermentée, de l'eau, de la levure de panification et un agent sec selon l'une quelconque des revendications 1 à 7.

11. Procédé selon la revendication 10, **caractérisé en ce que** les ingrédients de la pâte présentent un rapport en poids exprimé en matières sèches entre, d'une part, la farine fermentée acide et, d'autre part, l'extrait de levure de 0,8 à 2,6 ; de préférence de 1,0 à 2,3 ; encore de préférence de 1,2 à 2,0 ; et encore plus de préférence de 1,2 à 1,8.

12. Procédé selon l'une quelconque des revendications 10 et 11, **caractérisé en ce qu'**au moins une partie, et de préférence la totalité de la farine fermentée acide et de l'extrait de levure dans les ingrédients de la pâte, est utilisée sous forme d'un agent sec selon l'une quelconque des revendications 1 à 7 ou d'un améliorant sec selon l'une des revendications 8 à 9, et de préférence **en ce que** les ingrédients de la pâte présentent un rapport en poids entre, d'une part, la somme des matières sèches de la farine fermentée acide et de l'extrait de levure et, d'autre part, la farine non-fermentée, de 0,8 à 2,5%, de préférence de 1,0 à 1,5%, et encore de préférence de 1,15 à 1,35% (pourcentages du boulanger).

13. Procédé de panification, **caractérisé par** l'ajout dans la composition de la pâte d'un agent sec selon l'une des revendications 1 à 7 ou d'un améliorant sec selon l'une des revendications 8 à 9 et **caractérisé en ce que** les ingrédients de la pâte présentent un rapport en poids entre, d'une part, la somme des matières sèches de la farine fermentée acide et de l'extrait de levure et, d'autre part, la farine non-fermentée, de 0,8 à 2,5%, de préférence de 1,0 à 1,5%, et encore de préférence de 1,15 à 1,35% (pourcentages du boulanger).

14. Procédé de préparation de produits cuits comprenant :
- la préparation d'une pâte contenant de la farine non-fermentée, de l'eau, un agent sec selon l'une quelconque des revendications 1 à 7 et un agent levant choisi parmi la levure de panification, la poudre à lever et leur combinaison,
- la levée de la pâte au moyen de l'agent levant et,
- la cuisson de la pâte levée,
ledit procédé comprenant éventuellement un laminage de la pâte entre les étapes de préparation et de levée.

15. Pâte pour produit cuit de boulangerie comprenant :
• de la farine de céréale(s) non-fermentée,
• de la levure de panification,
• une teneur en NaCl ajouté inférieure ou égale 1,8%, de préférence inférieure ou égale 1,6%, et encore de préférence inférieure ou égale 1,5% en masse par rapport à la farine non-fermentée,
• une quantité de farine fermentée acide de manière à obtenir, après fermentation et cuisson de la pâte, un produit cuit ayant une teneur en acide lactique sur mie d'au moins 500 ppm, de préférence de 500 à 3000 ppm, encore de préférence de 750 à 2500 ppm,
• de l'extrait de levure.

16. Pâte pour produit cuit de boulangerie comprenant :
• de la farine de céréale(s) non-fermentée,
• de la levure de panification,
• de la farine fermentée acide, et
• de l'extrait de levure.
ladite pâte ayant une teneur en Na⁺ inférieure ou égale 0,50%, de préférence inférieure ou égale 0,45%, et encore de préférence inférieure ou égale 0,43% en masse par rapport à la pâte.

17. Pâte selon la revendication 16, **caractérisé en ce que** la farine fermentée acide présente une dose d'acide lactique supérieure ou égale à 70 g par kg, de préférence supérieure ou égale à 100g par kg de farine fermentée et apporte dans la pâte au moins 300 ppm, de préférence 350ppm à 2500 ppm, et encore de préférence de 500 ppm à 2000 ppm d'acide lactique.

18. Pâte selon l'une quelconque des revendications 15 à 17, **caractérisée en ce qu'**elle est congelée.

19. Pâton précuit surgelé susceptible d'être obtenu par la fermentation, la pré-cuisson et la surgélation d'une pâte selon l'une quelconque des revendications 15 à 18.

20. Produit cuit de boulangerie susceptible d'être obtenu par la fermentation et la cuisson d'une pâte selon l'une quelconque des revendications 15 à 18.

21. Produit cuit de boulangerie selon la revendication 20, à base de :
• farine de céréale(s) non-fermentée,
• levure de panification,
• farine fermentée acide, et
• extrait de levure, ledit produit cuit ayant une teneur en Na⁺ inférieure ou égale 0,60% ; de préférence inférieure ou égale 0,58%, et encore de préférence inférieure ou égale 0,55% en masse.

22. Produit cuit de boulangerie selon la revendication 21, **caractérisé en ce qu'**il contient au moins 500 ppm, de préférence de 500 à 3000 ppm, encore de préférence de 750 à 2500 ppm d'acide lactique sur mie.

23. Produit céréalier autre que les pâtes pour produits cuits de boulangerie et les produits cuits de boulangerie, comme par exemple les produits de biscuiterie ou les pâtes alimentaires, **caractérisé en ce qu'**il comprend un agent selon l'une des revendications 1 à 7.

24. Utilisation de l'agent selon l'une quelconque des revendications 1 à 7 comme substitut du sel (NaCl).

25. Utilisation de l'agent selon l'une quelconque des revendications 1 à 7 comme exhausteur de goût pour produit céréalier.

## Claims

1. A dry flavour enhancing agent for cereal products, preferably for baked bakery products comprising acid fermented flour, **characterised in that** it also comprises yeast extract.

2. The dry agent according to claim 1,
**characterised in that** it has a dry matter content greater than or equal to 85%, preferentially greater than or equal to 90%, preferably greater than or equal to 93%, more preferably greater than or equal to 96% by weight.

3. The dry agent according to any of the preceding claims, **characterised in that** it has a weight ratio expressed in dry matters between, on the one hand, acid fermented flour and, on the other hand, yeast extract from 0.8 to 2.6; preferably from 1.0 to 2.3; more preferably from 1.2 to 2.0; and even more preferably from 1.2 to 1.8.

4. The dry agent according to any of the preceding claims, **characterised in that** the acid fermented flour is derived from a fermented dough comprising one or more cereal flours suitable for bread-making, one or more flour(s) derived from a bran enriched mill product, or comprising a mixture of one or more cereal flour(s) suitable for bread-making with one or more flour(s) derived from a bran enriched mill product product.

5. The dry agent according to any of the preceding claims, **characterised in that** the fermented flour has a lactic acid content greater than or equal to 50 g per kg, preferably greater than or equal to 70 g per kg and more preferably greater than or equal to 100 g per kg.

6. The dry agent according to any of the preceding claims, **characterised in that** it comprises a yeast extract belonging to the genus *Saccharomyces,* preferably to the species *Saccharomyces cerevisiae.*

7. The dry agent according to any of the preceding claims, **characterised in that** it contains a brewer's yeast extract.

8. A dry improver for baked bakery products comprising a dry agent according to any of claims 1 to 7.

9. The dry improver according to claim 8, further comprising one or more ingredients chosen from the group consisting of ascorbic acid, emulsifiers, stabilizing-thickening agents and enzymes.

10. A method for preparing a bakery dough with ingredients comprising at least non-fermented flour, water, baker's yeast and a dry agent according to any of claims 1 to 7.

11. The method according to claim 10,
**characterised in that** the dough ingredients have a weight ratio expressed in dry matters between, on the one hand, acid fermented flour and, on the other hand, yeast extract from 0.8 to 2.6; preferably from 1.0 to 2.3; more preferably from 1.2 to 2.0; and even more preferably from 1.2 to 1.8.

12. The method according to either of claims 10 and 11, **characterised in that** at least part and preferably all of the acid fermented flour and the yeast extract in the ingredients of the dough, is used in the form of a dry agent according to any of claims 1 to 7 or a dry improver according to either of claims 8 and 9, and preferably **in that** the ingredients of the dough have a weight ratio between, on the one hand, the sum of dry matters of the acid fermented flour and the yeast extract and, on the other hand, the non-fermented flour, from 0.8 to 2.5%, preferably from 1.0 to 1.5%, and more preferably from 1.15 to 1.35% (baker's percentages).

13. A method of bread-making, **characterised by** adding into the dough composition a dry agent according to one of claims 1 to 7 or a dry improver according to either of claims 8 and 9 and **characterised in that** the ingredients of the dough have a weight ratio between, on the one hand, the sum of dry matters of the acid fermented flour and the yeast extract and, on the other hand, the non-fermented flour, of 0.8 to 2.5%, preferably of 1.0 to 1.5%, and more preferably of 1.15 to 1.35% (baker's percentages).

14. Method for preparing baked products comprising:
- preparing a dough containing non-fermented flour, water, a dry agent according to any of claims 1 to 7 and a leavening agent chosen among baber's yeast, leavening powder and combinations of same,
- leavening of the dough by means of the leavening agent and,
- baking the leavened dough,
said method optionally comprising rolling of the dough between the preparation and leavening steps.

15. Dough for baked bakery products comprising:
- non-fermented cereal flour,
- baker's yeast,
- a content of added NaCl lower than or equal to 1.8%, preferably lower than or equal to 1.6%, and more preferably lower than or equal to 1.5% by weight compared to the non-fermented flour,
- a quantity of acid fermented flour so as to obtain, after fermentation and baking of the dough, a baked product having a lactic acid content in crumb of at least 500 ppm, preferably of 500 to 3,000 ppm, more preferably of 750 to 2,500 ppm, and,
- yeast extract.

16. Dough for baked bakery products comprising:
- non-fermented cereal flour,
- baber's yeast,
- acid fermented flour, and,
- yeast extract.
said dough having an Na⁺ content lower than or equal to 0.50%, preferably lower than or equal to 0.45%, and more preferably lower than or equal to 0.43% by weight compared to the dough.

17. The dough according to claim 16,
**characterised in that** the acid fermented flour has a lactic acid content greater than or equal to 70 g per kg, preferably greater than or equal to 100 g per kg of fermented flour and provides the dough with at least 300 ppm, preferably 350 ppm to 2,500 ppm, and more preferably 500 ppm to 2,000 ppm of lactic acid.

18. The dough according to any of claims 15 to 17, **characterised in that** it is frozen.

19. A frozen parbaked dough obtainable by fermentation, parbaking and freezing of the dough according to any of claims 15 to 18.

20. A baked bakery product obtainable by fermentation and baking the dough according to any of claims 15 to 18.

21. The baked bakery product according to claim 20, based on:
- non-fermented cereal flour,
- baber's yeast,
- acid fermented flour, and,
- yeast extract,
said baked product having an Na⁺ content lower than or equal to 0.60%, preferably lower than or equal to 0.58%, and more preferably lower than or equal to 0.55% by weight.

22. The cooked bakery product according to claim 21, **characterised in that** it contains at least 500 ppm, preferably from 500 to 3,000 ppm, more preferably from 750 to 2,500 ppm of lactic acid in crumb.

23. A cereal product other than doughs for baked bakery products and baked bakery products, such as for example biscuit products or food pastas, **characterised in that** it comprises an agent according to one of claims 1 to 7.

24. Use of the agent according to any of claims 1 to 7 as a salt (NaCl) substitute.

25. Use of the agent according to any of claims 1 to 7 as a flavour enhancer for cereal products.

## Patentansprüche

1. Geschmacksverstärkende Trockensubstanz für Getreideprodukt, vorzugsweise für gebackenes Bäckereiprodukt, die fermentiertes Sauermehl umfasst, **dadurch gekennzeichnet, dass** sie weiterhin Hefeextrakt umfasst.

2. Trockensubstanz nach Anspruch 1, **dadurch gekennzeichnet, dass** sie einen Gehalt an Trockenmaterial von über oder gleich 85 Gew.-% aufweist, bevorzugt von über oder gleich 90 Gew.-%, vorzugsweise von über oder gleich 93 Gew.-% und in noch bevorzugter Weise von über oder gleich 96 Gew.-%.

3. Trockensubstanz nach einem der vorangehenden Ansprüche, **dadurch gekennzeichnet, dass** sie ein Gewichtsverhältnis, ausgedrückt in Trockenmaterialien zwischen einerseits dem fermentierten Sauermehl und andererseits dem Hefeextrakt, von 0,8 zu 2,6 hat, vorzugsweise von 1,0 zu 2,3, in noch bevorzugter Weise von 1,2 zu 2,0 und in noch mehr bevorzugter Weise von 1,2 zu 1,8.

4. Trockensubstanz nach einem der vorangehenden Ansprüche, **dadurch gekennzeichnet, dass** das fermentierte Sauermehl aus einer fermentierten Masse hergestellt ist, die ein oder mehrere Mehle aus zur Brotherstellung geeignetem/n Getreide/n, ein oder mehrere aus kleiehaltigem/n Mühlenprodukt/en oder ein Gemisch aus einem oder mehreren Mehlen aus zur Brotherstellung geeignetem/n Getreide/n mit einem oder mehreren aus kleiehaltigem/n Mühlenprodukt/en umfasst.

5. Trockensubstanz nach einem der vorangehenden Ansprüche, **dadurch gekennzeichnet, dass** das fermentierte Mehl eine Dosis Milchsäure von über oder gleich 50 g je kg aufweist, vorzugsweise von über oder gleich 70 g je kg und in noch bevorzugter Weise von über oder gleich 100 g je kg.

6. Trockensubstanz nach einem der vorangehenden Ansprüche, **dadurch gekennzeichnet, dass** sie einen Hefeextrakt umfasst, der zur Art *Saccharomyces* gehört, vorzugsweise zur Sorte *Saccharomyces cerevisiae.*

7. Trockensubstanz nach einem der vorangehenden Ansprüche, **dadurch gekennzeichnet, dass** sie einen Bierhefeauszug enthält.

8. Trockenes Hilfsmittel für gebackenes Bäckereiprodukt, das eine Trockensubstanz nach einem der Ansprüche 1 bis 7 umfasst.

9. Trockenes Hilfsmittel nach Anspruch 8, das weiterhin eine oder mehrere Zutaten umfasst, die aus der Gruppe ausgewählt sind, die aus der Ascorbinsäure, den Emulgatoren, den Stabilisierungs-Verdickungsmitteln und den Enzymen besteht.

10. Verfahren zur Zubereitung eines Bäckereiteigs mit Zutaten, die mindestens nicht fermentiertes Mehl, Wasser, Backhefe und eine Trockensubstanz nach einem der Ansprüche 1 bis 7 umfassen.

11. Verfahren nach Anspruch 10, **dadurch gekennzeichnet, dass** die Zutaten des Teigs ein Gewichtsverhältnis, ausgedrückt in Trockensubstanzen zwischen einerseits dem fermentierten Sauermehl und andererseits dem Hefeextrakt, von 0,8 zu 2,6 aufweisen, vorzugsweise von 1,0 zu 2,3, in noch bevorzugter Weise von 1,2 zu 2,0 und noch mehr bevorzugter Weise von 1,2 zu 1,8.

12. Verfahren nach einem der Ansprüche 10 und 11, **dadurch gekennzeichnet, dass** mindestens ein Teil und vorzugsweise die Gesamtheit des fermentierten Sauermehls und des Hefeextrakts in den Zutaten des Teigs in Form einer Trockensubstanz nach einem der Ansprüche 1 bis 7 oder eines trockenen Hilfsmittels nach einem der Ansprüche 8 bis 9 verwendet wird, und vorzugsweise **dadurch**, dass die Zutaten des Teigs ein Gewichtsverhältnis zwischen einerseits der Summe der Trockenmaterialien des fermentierten Sauermehls und des Hefeextrakts und andererseits dem nicht fermentierten Mehl von 0,8 zu 2,5%, vorzugsweise von 1,0 zu 1,5% und in noch bevorzugter Weise von 1,15 zu 1,35% aufweisen (Prozentsätze des Bäckers).

13. Backverfahren, durch das Hinzufügen in die Zusammensetzung des Teigs einer Trockensubstanz nach einem der Ansprüche 1 bis 7 oder eines trockenen Hilfsmittels nach einem der Ansprüche 8 bis 9 **gekennzeichnet** und **dadurch gekennzeichnet, dass** die Zutaten des Teigs ein Gewichtsverhältnis zwischen einerseits der Summe der Trockenmaterialien des fermentierten Sauermehls und des Hefeextrakts und andererseits dem nicht fermentierten Mehl von 0,8 zu 2,5%, vorzugsweise von 1,0 zu 1,5% und in noch bevorzugter Weise von 1,15 zu 1,35% aufweisen (Prozentsätze des Bäckers).

14. Verfahren zur Vorbereitung von gebackenen Produkten, das umfasst:
- die Vorbereitung eines Teigs, der nicht fermentiertes Mehl, Wasser, eine Trockensubstanz nach einem der Ansprüche 1 bis 7 und ein Triebmittel enthält, das aus der Backhefe, dem Backpulver und ihrer Kombination ausgewählt ist,
- das Aufgehen des Teigs mittels des Triebmittels und
- das Backen des gegangenen Teigs,
wobei das Verfahren eventuell ein Walzen des Teigs zwischen den Schritten der Vorbereitung und des Aufgehens umfasst.

15. Teig für gebackenes Bäckereiprodukt, der umfasst:
- nicht fermentiertes Getreidemehl,
- Backhefe,
- einen Gehalt an hinzugefügtem NaCl von unter oder gleich 1,8 Gew.-%, vorzugsweise von unter oder gleich 1,6 Gew.-%, und in noch bevorzugter Weise von unter oder gleich 1,5 Gew.-% im Verhältnis zum nicht fermentierten Mehl,
- eine Menge fermentierten Sauermehls, um nach Fermentierung und Backen des Teigs ein gebackenes Produkt zu erhalten, das einen Gehalt an Milchsäure in der Krume von mindestens 500 ppm hat, vorzugsweise von 500 bis 3000 ppm, in noch bevorzugter Weise von 750 bis 2500 ppm,
- Hefeextrakt.

16. Teig für gebackenes Bäckereiprodukt, der umfasst:
- nicht fermentiertes Getreidemehl,
- Backhefe,
- fermentiertes Sauermehl und
- Hefeextrakt,
wobei der Teig einen Gehalt an Na* von unter oder gleich 0,50 Gew.-%, vorzugsweise von unter oder gleich 0,45 Gew.-% und in noch bevorzugter Weise von unter oder gleich 0,43 Gew.-% im Verhältnis zum Teig hat.

17. Teig nach Anspruch 16, **dadurch gekennzeichnet, dass** das fermentierte Sauermehl eine Dosis Milchsäure von über oder gleich 70 g je kg, vorzugsweise von über oder gleich 100 g je kg fermentiertes Sauermehl aufweist und in den Teig mindestens 300 ppm, vorzugsweise 350 ppm bis 2500 ppm und in noch bevorzugter Weiser von 500 ppm bis 2000 ppm Milchsäure einbringt.

18. Teig nach einem der Ansprüche 15 bis 17, **dadurch gekennzeichnet, dass** sie tiefgefroren ist.

19. Vorgebackenes tiefgefrorenes Teigstück, das durch Fermentieren herstellbar ist, das Vorbacken und das Tieffrieren eines Teigs nach einem der Ansprüche 15 bis 18.

20. Gebackenes Bäckereiprodukt, das durch Fermentieren und Backen eines Teigs nach einem der Ansprüche 15 bis 18 herstellbar ist.

21. Gebackenes Bäckereiprodukt nach Anspruch 20 auf der Basis von:
- nicht fermentiertem Getreidemehl,
- Backhefe,
- fermentiertem Sauermehl und
- Hefeextrakt,
wobei das gebackene Produkt einen Gehalt an Na* von unter oder gleich 0,60 Gew.-%, vorzugsweise von unter oder gleich 0,58 Gew.-% und in noch bevorzugter Weise von unter oder gleich 0,55 Gew.-% hat.

22. Gebackenes Bäckereiprodukt nach Anspruch 21, **dadurch gekennzeichnet, dass** es mindestens 500 ppm, vorzugsweise 500 bis 3000 ppm, in noch bevorzugter Weise 750 bis 2500 ppm Milchsäure in der Krume enthält.

23. Getreideprodukt, das kein Teig für gebackene Bäckereiprodukte und kein gebackenes Bäckereiprodukt ist, wie zum Beispiel Keksprodukte oder Lebensmittelteige, **dadurch gekennzeichnet, dass** es eine Substanz nach einem der Ansprüche 1 bis 7 umfasst.

24. Verwendung der Substanz nach einem der Ansprüche 1 bis 7 als Salzersatz (NaCl).

25. Verwendung der Substanz nach einem der Ansprüche 1 bis 7 als Geschmacksverstärker für Getreideprodukt.
